# EUROPÄISCHE PATENTSCHRIFT

(11) **EP 4 508 834 B1**
(45) Veröffentlichungstag und Bekanntmachung des Hinweises auf die Patenterteilung: **07.05.2025**
(21) Anmeldenummer: 23723526.2
(22) Anmeldetag: 28.04.2023
(51) Int. Cl.: H04N 9/31, B65G 54/02

(54) **VERFAHREN ZUM BETREIBEN EINES AUTOMATISIERUNGSSYSTEMS UND AUTOMATISIERUNGSSYSTEM**
METHOD FOR OPERATING AN AUTOMATION SYSTEM AND AUTOMATION SYSTEM
PROCÉDÉ DE FONCTIONNEMENT D'UN SYSTÈME D'AUTOMATISATION ET SYSTÈME D'AUTOMATISATION

(30) Priorität: 10.05.2022 DE 102022111680
(43) Veröffentlichungstag der Anmeldung: 19.02.2025
(73) Patentinhaber: Beckhoff Automation GmbH, 33415 Verl (DE)
(72) Erfinder: HENKE, Christian, 6820 Frastanz (AT); MATUSCHKE, Michel, 59872 Meschede (DE); PEHLIVAN, Armin, 6714 Nüziders (AT); HOLZER, Gerhard, 2451 Au am Leithaberge (AT); BECKHOFF, Johannes, 33758 Schloß Holte-Stukenbrock (DE)
(74) Vertreter: Patentanwaltskanzlei WILHELM & BECK
(86) Internationale Anmeldenummer: PCT/EP2023/061324
(87) Internationale Veröffentlichungsnummer: WO 2023/217559

(56) Entgegenhaltungen:
- CA-A1- 2 863 566
- DE-A1- 102020 127 012
- US-A1- 2016 210 738
- US-A1- 2020 290 093

## Beschreibung

Die Erfindung betrifft ein Verfahren zum Betreiben eines Automatisierungssystems, sowie ein Automatisierungssystem.

Automatisierungssysteme können zum Bewegen von Objekten Antriebssysteme umfassen. Mittels eines Antriebssystems kann ein bewegliches Element einer Anlage, einer Maschine, eines Gebäudes oder einer Bühne in mindestens eine Richtung bewegt oder positioniert werden. Antriebssysteme können einen permanent erregten elektromagnetischen Motor mit einem Stator und einen auf dem Stator in mindestens eine Richtung beweglichen Läufer umfassen. Insbesondere kann das Antriebssystem ein Planarantriebssystem sein, bei dem der Stator planar ist und der Läufer in mindestens zwei Richtungen bewegt werden kann. Die genannten Antriebssysteme können unter anderem in der Automatisierungstechnik, insbesondere der Fertigungstechnik, der Handhabungstechnik, der Verfahrenstechnik, der Bühnen- und Showtechnik bzw. der Gebäude- und Gastronomietechnik eingesetzt werden.

Bei einem permanent erregten elektromagnetischen Planarmotor wird dadurch eine Antriebskraft auf den Läufer ausgeübt, dass bestromte Spulengruppen einer Statoreinheit mit Antriebsmagneten mehrerer Magnetanordnungen des Läufers magnetisch wechselwirken. Aus dem Stand der Technik sind Planarantriebssysteme mit rechteckigen und längsgestreckten Spulengruppen und rechteckigen und längsgestreckten Magnetanordnungen des Läufers bekannt. Ein solches Planarantriebssystem wird beispielsweise in der DE 10 2017 131 304 A1 oder der DE 10 2020 127 012 A1 beschrieben. Mit einem solchen Planarantriebssystem wird insbesondere eine lineare und translative Bewegung des Läufers möglich. Das bedeutet, dass mittels eines solchen Planarantriebssystems der Läufer oberhalb einer Statorfläche, unter der die rechteckigen und längsgestreckten Spulengruppen angeordnet sind, parallel zur Statorfläche frei beweglich und senkrecht zur Statorfläche zumindest in verschiedenen Abständen zur Statorfläche bewegt werden kann. Ferner sind aus dem Stand der Technik auch Linearantriebssysteme bekannt.

Wird ein solches Antriebssystem, insbesondere ein Planarantriebssystem, in der Automatisierungstechnik, insbesondere der Fertigungstechnik, der Handhabungstechnik, der Verfahrenstechnik, der Bühnen- und Showtechnik bzw. der Gebäude- und Gastronomietechnik eingesetzt, so können für den Betrieb des Antriebssystems relevante Informationen einem menschlichen Bediener oder Überwacher mittels eines Bildschirms oder Displays angezeigt werden. Dies hat jedoch zur Folge, dass der Bediener oder Überwacher seinen Blick regelmäßig vom Antriebssystem abwenden muss, um den Bildschirm oder das Display zu betrachten. Dadurch kann der Bediener oder Überwacher gegebenenfalls nicht alle relevanten Informationen rechtzeitig wahrnehmen und eventuell zu spät auf mittels eines Bildschirms oder Displays angezeigte Informationen reagieren.

Ein Verfahren mit den Merkmalen des Oberbegriffs des Anspruch 1 ist aus der US 2020/290093 A1 bekannt. Weiterer Stand der Technik ist in der US 2016/210738 A1 und der CA 2 863 566 A1 beschreiben.

Es ist eine Aufgabe der Erfindung, ein verbesserstes Automatisierungssystem bereitzustellen. Eine weitere Aufgabe der Erfindung ist es, ein Verfahren zum Betreiben für ein solches Automatisierungssystem bereitzustellen. Dabei soll es möglich werden, Informationen wahrnehmen zu können, ohne den Blick von Antriebssystem abwenden zu müssen.

Diese Aufgaben werden mit dem Verfahren zum Betreiben eines Automatisierungssystems, und dem Automatisierungssystem der unabhängigen Patentansprüche gelöst. Vorteilhafte Weiterbildungen sind jeweils in abhängigen Patentansprüchen angegeben.

Nach einem ersten Aspekt umfasst die Erfindung ein Verfahren zum Betreiben eines Automatisierungssystems. Das Automatisierungssystem umfasst ein Antriebssystem und eine optische Projektionseinheit. Das Antriebssystem umfasst einen bewegbaren Läufer, der mittels eines Antriebs antreibbar ist. Ein Steuerungssystem des Automatisierungssystems führt die im folgenden beschriebenen Schritte aus.

Es wird eine Positionsinformation eines Läufers ermittelt. Ferner wird ein anzuzeigendes Objekt mit einer Position des Läufers verknüpft. Anschließend wird eine von der optischen Projektionseinheit anzuzeigende Projektion anhand der Positionsinformation des Läufers und des anzuzeigenden Objekts gerendert. Schlussendlich wird die gerenderte Projektion an die optische Projektionseinheit ausgegeben, so dass die optische Projektionseinheit die gerenderte Projektion auf einer Oberfläche und/oder als Hologramm in direkter Nähe des Antriebssystems und/oder dem Läufer des Antriebssystems ausgibt.

Die ersten beiden Schritte, also das Ermitteln der Positionsinformation des Läufers und das Verknüpfen des anzuzeigenden Objekts mit dem Läufer können dabei hintereinander in beliebiger Reihenfolge oder gleichzeitig ausgeführt werden. Das Rendern kann insbesondere ein Zusammensetzen der anzuzeigenden Projektion anhand der Positionsinformation und des anzuzeigenden Objekts umfassen.

Das anzuzeigende Objekt umfasst eine Anzeigeinformation, wobei die Anzeigeinformation eine für einen menschlichen Bediener oder Überwacher relevante Information umfassen kann. Da das anzuzeigende Objekt auf eine Oberfläche und/oder als Hologramm in direkter Nähe des Antriebssystems ausgegeben wird, wird es für den menschlichen Bediener oder Überwacher möglich, relevante Informationen wahrzunehmen, ohne den Blick vom Antriebssystem abwenden zu müssen.

Das Antriebssystem ist ein Planarantriebssystem, wobei die Fläche, auf die das anzuzeigende Objekt ausgegeben wird, zumindest teilweise eine Statorfläche des Planarantriebssystems umfassen kann.

Ein zweiter Aspekt, der nicht unter den Anspruchsgegenstand fällt, umfasst ein Steuerungssystem für ein Automatisierungssystem. Das Steuerungssystem ist eingerichtet, die Schritte des erfindungsgemäßen Verfahrens auszuführen. Das Steuerungssystem ist also eingerichtet, eine Positionsinformation eines Läufers zu ermitteln und ein anzuzeigendes Objekt mit der Position des Läufers zu verknüpfen. Ferner ist das Steuerungssystem eingerichtet, anschließend eine von der optischen Projektionseinheit anzuzeigende Projektion anhand der Positionsinformation des Läufers und des anzuzeigenden Objekts zu rendern. Außerdem ist das Steuerungssystem eingerichtet, die gerenderte Projektion an die optische Projektionseinheit auszugeben. Die optische Projektionseinheit kann dann die gerenderte Projektion auf einer Oberfläche und/oder als Hologramm in direkter Nähe des Antriebssystems und/oder dem Läufer des Antriebssystems ausgeben.

Das Steuerungssystem kann dabei zumindest eine Recheneinheit umfassen. Gegebenenfalls kann das Steuerungssystem auch eine erste Steuereinheit mit einer ersten Recheneinheit und eine zweite Steuereinheit mit einer zweiten Recheneinheit umfassen. Die erste Steuereinheit kann dann insbesondere zur Steuerung des Antriebssystems dienen und die Positionsinformation des Läufers bereitstellen, während die zweite Steuereinheit die Positionsinformation einliest, das anzuzeigende Objekt mit dem Läufer verknüpft, die anzuzeigende Projektion anhand der Positionsinformation des Läufers und des anzuzeigenden Objekts rendert und die gerenderte Projektion an die optische Projektionseinheit ausgibt.

Gegebenenfalls kann die zweite Steuereinheit mit einer zweiten Recheneinheit wieder eine zusätzliche weitere Steuerungseinheit und eine zusätzliche weitere Recheneinheit umfassen. Die zusätzliche weitere Steuerungseinheit übermittelt der zweiten Steuerungseinheit Informationen zum Projektionsausschnitt auf den Läufer und erhält von der zweiten Projektionseinheit angepasste Informationen für diesen Projektionsausschnitt. Die zusätzliche weitere Recheneinheit übernimmt das Rendern des Projektionsausschnitts und übermittelt die gerenderte Projektion an eine weitere Projektionseinheit.

Nach einem dritten Aspekt umfasst die Erfindung ein Automatisierungssystem mit einem Antriebssystem und einer optischen Projektionseinheit. Das Antriebssystem umfasst einen bewegbaren Läufer. Der Läufer ist mittels eines Antriebs antreibbar. Das Automatisierungssystem umfasst ferner ein erfindungsgemäßes Steuerungssystem.

In einer Ausführungsform des Verfahrens wird die Positionsinformation anhand einer Position des Läufers in Bezug auf das Automatisierungssystem und/oder das Antriebssystem ermittelt. Dies kann beispielsweise eine Bestimmung der Position des Läufers in Bezug zu einer Statoreinheit des Antriebssystems umfassen und insbesondere mittels eines Positionssensors erfolgen. Umfasst der Läufer eine Magneteinheit, kann der Positionssensor einen Magnetfeldsensor aufweisen. Dadurch kann eine auf die Position des Läufers abgestimmte Ausgabe des anzuzeigenden Objekts ermöglicht sein.

In einer Ausführungsform des Verfahrens wird die Position des Läufers zumindest doppelt so häufig, insbesondere dreimal so häufig, ermittelt wie die anzuzeigende Projektion gerendert wird. Dadurch kann erreicht werden, dass eine auf die Position des Läufers abgestimmte Ausgabe des anzuzeigenden Objekts schnell genug erfolgen kann und sich die anzuzeigende Projektion mit dem Läufer mitbewegen kann, ohne Ruckeln oder Störeffekte.

In einer Ausführungsform des Verfahrens ist eine Kommunikation innerhalb des Steuerungssystems echtzeitfähig. Dies bedeutet insbesondere, dass Informationen innerhalb des Steuerungssystems so schnell ausgetauscht werden können, dass ein Nachführen des anzuzeigenden Objekts auch bei einer schnellen Bewegung des Läufers möglich wird und sich das anzuzeigende Objekt mit dem Läufer ohne Versatz mitbewegt.

In einer Ausführungsform des Verfahrens wird die anzuzeigende Projektion zunächst in einem virtuellen Figurenraum anhand eines virtuellen Objekts berechnet und anschließend für einen Realraum anhand eines Sichtfensters des Figurenraums gerendert. Durch die ausgegebene gerenderte Projektion des Sichtfensters wird die Erfassung und/oder Wahrnehmung des Läufers oder dessen Aufbauten und/oder Transportgüter und/oder der Oberfläche mit Informationen aus dem Figurenraum angereichert. Dadurch wird eine effiziente Berechnung und ein effizientes Rendern des anzuzeigenden Objekts ermöglicht.

Der Realraum kann über eine Verknüpfungsvorschrift mit dem mehrdimensionalen Figurenraum verknüpft sein. Den im Realraum angeordneten Objekten wie beispielsweise Komponenten des Antriebssystems können durch eine Zuordnungsvorschrift Figuren im Figurenraum zugeordnet sein. Mittels einer Verknüpfungsvorschrift zwischen Realraum und Figurenraum kann bestimmt werden, wie die virtuellen Objekte des Figurenraums in den Realraum projiziert werden, um dann das gerenderte Sichtfenster ausgeben zu können.

Eine Bewegung der im Realraum angeordneten Objekte, wie beispielsweise des Läufers, kann in den Figurenraum übertragen werden. Ein dem Objekt im Realraum zugeordnetes virtuelles Objekt kann dann im Figurenraum ebenfalls bewegt werden. Die anzuzeigende Projektion kann dann anhand einer Position des virtuellen Objekts ebenfalls verändert und damit in der anzuzeigenden gerenderten Projektion ebenfalls bewegt werden.

Durch die Verknüpfung von Realraum und Figurenraum kann ein hoher Abstraktionsgrad erreicht werden, der eine Anpassung des erfindungsgemäßen Verfahrens an eine Vielzahl von Anwendungsfällen ermöglicht.

Der Figurenraum kann beispielsweise ein 3D-Modell (oder Ausschnitte daraus) einer Maschine, einer Anlage eines Gebäudes, einer Bühne oder Ähnliches beinhalten. Real vorhandene Objekte können mittels einer Steuereinheit mit virtuellen Abbildungen im Figurenraum verbunden werden. Erfolgt nun eine Interaktion mit dem virtuellen Raum, reagieren die jeweiligen realen Objekte und eventuelle virtuelle Erweiterungen davon in entsprechender Weise.

Es kann vorgesehen sein, dass die Position und Größe des Figurenraums und der den zu steuernden Objekten zugeordneten Figuren automatisch entsprechend der Lage und Größe erfasster, zu bewegbarer Objekte festgelegt werden. Dies erleichtert die Erzeugung eines einem Realraum zugeordneten Figurenraums.

In einer Ausführungsform wird die Positionsinformation anhand einer Position des Läufers in Bezug auf den Figurenraum bestimmt.

In einer Ausführungsform des Verfahrens beinhaltet der Figurenraum verschiedene Elemente. Eines der Elemente wird anhand einer Information aus dem Steuerungssystem und/oder dem Automatisierungssystem als anzuzeigendes Objekt ausgewählt und beim Rendern der anzuzeigenden Projektion berücksichtigt. Dies kann dann vorteilhaft sein, wenn mehrere Elemente unterschiedliche Information beinhalten können und so auch unterschiedliche Information angezeigt werden kann.

In einer Ausführungsform des Verfahrens ist dem anzuzeigenden Objekt im Figurenraum eine Eigenschaft zugeordnet. Das Element wird anhand der Eigenschaft ausgewählt.

In einer Ausführungsform des Verfahrens wird das virtuelle Objekt im Figurenraum anhand der Positionsinformation des Läufers bewegt. So wird ein einfaches Nachführen des anzuzeigenden Objekts bei einer Bewegung des Läufers ermöglicht.

In einer Ausführungsform des Verfahrens wird die anzuzeigende Projektion derart gerendert, dass sich das anzuzeigende Objekt mit dem Läufer mitbewegt und eine Relativposition zwischen dem Läufer und dem anzuzeigenden Objekt fixiert ist. Dies ermöglicht ebenfalls ein einfaches Nachführen des anzuzeigenden Objekts bei einer Bewegung des Läufers.

In einer Ausführungsform des Verfahrens wird das anzuzeigende Objekt auf den Läufer projiziert. In einer Ausführungsform des Verfahrens wird das anzuzeigende Objekt neben den Läufer mit einem vorgegebenen Abstand zum Läufer projiziert. In beiden Fällen kann eine einfache Zuordnung einer mittels des anzuzeigenden Objekts weitergegebenen Information zu einem bestimmten Läufer für einen menschlichen Bediener oder Überwacher einfach zu erkennen sein.

In einer Ausführungsform des Verfahrens wird das Ermitteln der Positionsinformation, das Rendern der anzuzeigenden Projektion sowie das Ausgeben der gerenderten Projektion zumindest nach jeder Ortsveränderung des Läufers erneut durchgeführt. Auch dadurch kann ein einfaches Nachführen des anzuzeigenden Objekts bei einer Bewegung des Läufers ermöglicht werden.

In einer Ausführungsform des Verfahrens ist das anzuzeigende Objekt mit einer realen Messgröße, insbesondere einer realen Messgröße des Antriebssystems, verknüpft ist. Die reale Messgröße kann dabei insbesondere eine Temperatur, einen Energieverbrauch, eine Kraft oder ein Gewicht von wenigstens einem Läufer oder wenigsten einem Motorelement des Antriebs sein.

In einer Ausführungsform des Verfahrens wird eine Anzeigeinformation über eine Schnittstelle eingelesen und das anzuzeigende Objekt anhand der Anzeigeinformation eingestellt. Über die Schnittstelle können beispielsweise reale Messgrößen oder andere anzuzeigende Informationen eingelesen werden, die dem Steuerungssystem sonst nicht zur Verfügung stehen würden. Dadurch kann eine weitere Flexibilisierung der anzuzeigenden Information erreicht werden und beispielsweise zusätzliche, für den menschlichen Bediener oder Überwacher relevante Informationen eingelesen werden.

Gemäß der Erfindung beinhaltet die Positionsinformation ein Abstand einer Läuferfläche von der Fläche. Beim Rendern der anzuzeigenden Projektion wird der Abstand berücksichtigt. Ist das Antriebssystem ein Planarantriebssystem, kann der Abstand insbesondere anhand einer Flughöhe des Läufers bestimmt werden. Dies ermöglicht, die anzuzeigende Projektion auf den Abstand abzustimmen, beispielsweise indem auf die Läuferfläche fokussiert wird.

In einer Ausführungsform des Verfahrens umfasst das Automatisierungssystem eine weitere optische Projektionseinheit. Vor dem Rendern der anzuzeigenden Projektion wird anhand der Positionsinformation festgestellt, ob die gerenderte Projektion von der optischen Projektionseinheit und/oder von der weiteren optischen Projektionseinheit projiziert werden soll. Beim Rendern wird diese Information berücksichtigt. Dies ermöglicht auch komplexere Darstellungen mittels mehrerer optischer Projektionseinheiten.

In einer Ausführungsform des Verfahrens wird in einem Übergangsbereich die gerenderte Projektion sowohl von der optischen Projektionseinheit als auch von der weiteren optischen Projektionseinheit projiziert wird.

In einer Ausführungsform des Automatisierungssystems ist das Antriebssystem ein Planarantriebssystem. Das Planarantriebssystem umfasst zumindest eine Statoreinheit mit jeweils einer Mehrzahl von Spulengruppen zum Erzeugen eines Statormagnetfelds, eine Statorfläche oberhalb der Statoreinheit sowie einen Läufer. Die Fläche entspricht der Statorfläche. Der Läufer weist ferner eine Mehrzahl von Magneteinheiten zum Erzeugen eines Läufermagnetfelds auf. Die Spulengruppen und die Magneteinheiten bilden dabei den Antrieb. Der Läufer kann oberhalb der Statorfläche mittels einer Wechselwirkung des Statormagnetfelds mit dem Läufermagnetfeld parallel zur Statorfläche bewegt werden.

In einer Ausführungsform des Automatisierungssystems wird mittels eines echtzeitfähigen Kommunikationsbusses eine Datenverbindung zwischen dem Antriebssystem, dem Steuerungssystem und der optischen Projektionseinheit bereitgestellt.

Die Erfindung wird anhand der beigefügten Figuren näher erläutert. Hierbei zeigen:
- Fig. 1: einen Querschnitt eines Automatisierungssystems;
- Fig. 2: eine Draufsicht des Automatisierungssystems der Fig. 1;
- Fig. 3: eine weitere Draufsicht des Automatisierungssystems der Fig. 1 und 2 nach einer Bewegung eines Läufers;
- Fig. 4: eine weitere Draufsicht auf das Automatisierungssystem der Fig. 1 bis 3;
- Fig. 5: eine Seitenansicht eines weiteren Automatisierungssystems; und
- Fig. 6: eine Darstellung der Erstellung der gerenderten Projektion.

In der folgenden Beschreibung der Figuren werden identische Elemente mit identischen Bezugszeichen gekennzeichnet. Es ist möglich, dass in einzelnen Figuren Bezugszeichen dargestellt sind, die nicht im Zusammenhang mit dieser Figur erläutert werden. In diesem Fall können die Ausführungen zu diesen Bezugszeichen, die im Zusammenhang mit weiteren Figuren erläutert sind, herangezogen werden, um die mit diesen Bezugszeichen gekennzeichneten Elemente zu beschreiben. Ferner sind in den Figurenbeschreibungen Merkmale und Eigenschaften gegebenenfalls als optional bezeichnet. Diese als optional bezeichneten Merkmale und Eigenschaften sind dann nicht zwingend erforderlich und können gegebenenfalls auch weggelassen werden.

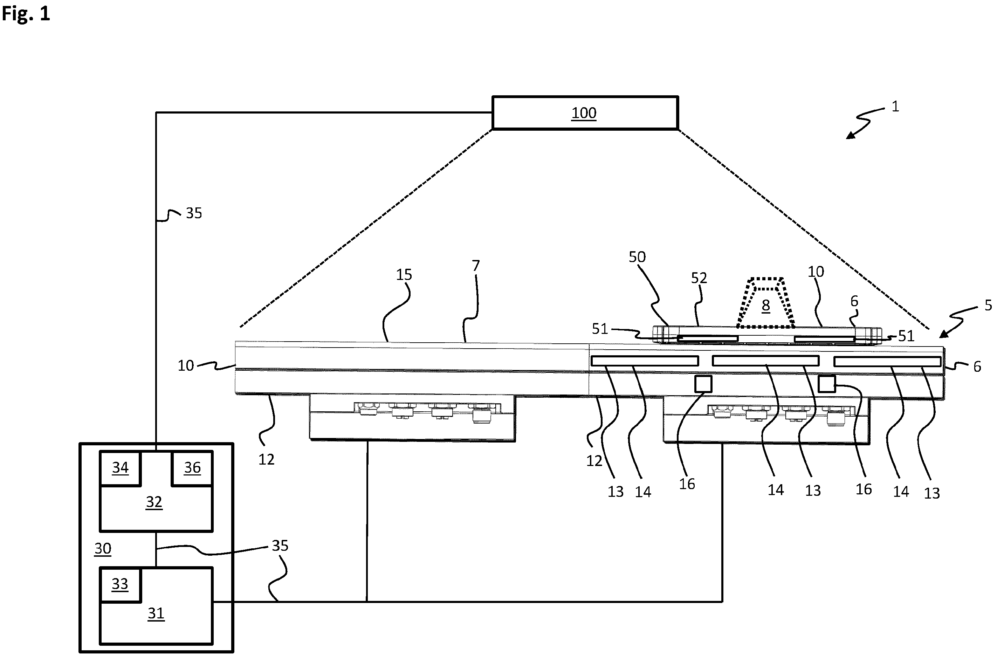

Fig. 1 zeigt einen Querschnitt eines Automatisierungssystems 1 mit einem Antriebssystem 5 und einer optischen Projektionseinheit 100, wobei das Antriebssystem 5 einen bewegbaren Läufer 50 umfasst. Der Läufer 50 ist mittels eines Antriebs 6 antreibbar. Das Automatisierungssystem 1 weist ferner ein Steuerungssystem 30 auf. Das Steuerungssystem 30 ist zur Ausführung der im Folgenden erläuterten Schritte eingerichtet. Das Steuerungssystem 30 ist eingerichtet, eine Positionsinformation des Läufers 50 zu ermitteln und ein anzuzeigendes Objekt mit dem Läufer 50 zu verknüpfen. Ferner ist das Steuerungssystem 30 eingerichtet, eine von der optischen Projektionseinheit 100 anzuzeigende Projektion anhand der Positionsinformation des Läufers 50 und des anzuzeigenden Objekts zu rendern. Ferner ist das Steuerungssystem 30 eingerichtet, die gerenderte Projektion an die optische Projektionseinheit 100 auszugeben, so dass die optischen Projektionseinheit 100 die gerenderte Projektion auf einer Oberfläche 7 und/oder als Hologramm 8 in unmittelbarer Nähe des Läufers auf dem Läufer 50 des Antriebssystems 5 ausgibt.

Das anzuzeigende Objekt kann dabei insbesondere die anzuzeigende Information inklusive der Art der Darstellung umfassen, wobei noch keine Position festgelegt ist, an der das anzuzeigende Objekt angezeigt werden soll. Die anzuzeigende Projektion kann neben dem anzuzeigenden Objekt auch die Position im Automatisierungssystem, an der das anzuzeigende Objekt angezeigt werden soll, umfassen.

Die optische Projektionseinheit 100 kann dabei beispielsweise einen Beamer umfassen, mit dem ein zweidimensionales mehrfarbiges Bild mit einer vorgegebenen Auflösung ausgegeben werden kann. Alternativ oder zusätzlich kann die optische Projektionseinheit 100 eine Laserlichtquelle umfassen, mit dem ein zweidimensionales ein- oder mehrfarbiges Bild ausgegeben werden kann. Alternativ oder zusätzlich kann die optische Projektionseinheit 100 auch ein dreidimensionales mehrfarbiges Bild, auch als Hologramm 8 bezeichnet, mittels holografischer Projektion erzeugen.

Optional, aber ebenfalls in Fig. 1 dargestellt ist, dass das Antriebssystem 5 ein Planarantriebssystem 10 ist. Das Planarantriebssystem 10 umfasst zumindest eine Statoreinheit 13 mit jeweils einer Mehrzahl von Spulengruppen 14 zum Erzeugen eines Statormagnetfelds, eine Statorfläche 15 oberhalb der Statoreinheit 13 sowie den Läufer 50. Die Oberfläche 7 entspricht dabei der Statorfläche 15. Der Läufer 50 weist eine Mehrzahl von Magneteinheiten 51 zum Erzeugen eines Läufermagnetfelds auf. Die Spulengruppen 14 und die Magneteinheiten 51 bilden den Antrieb 6. Der Läufer 50 ist oberhalb der Statorfläche 15 mittels einer Wechselwirkung des Statormagnetfelds mit dem Läufermagnetfeld parallel zur Statorfläche 15 bewegbar. Die Statoreinheit 13 mit jeweils einer Mehrzahl von Spulengruppen 14 zum Erzeugen eines Statormagnetfelds ist nur für ein Statormodul 12 dargestellt, wobei das Planarantriebssystem 10 mehrere Statormodule 12 umfasst. Jedes Statormodul 12 kann dabei identisch aufgebaut sein. Ferner kann es vorgesehen sein, dass innerhalb eines Statormoduls 12 mehrere Statoreinheiten 13 mit Spulengruppen 14 angeordnet sind. Gegebenenfalls können auch weitere Magneteinheiten 51 und weitere Spulengruppen 14 angeordnet werden, so dass der Läufer 50 in Fig. 1 sowohl nach rechts und links als auch in die Zeichenebene hinein oder aus dieser heraus bewegt werden kann.

Es kann vorgesehen sein, dass das Antriebssystem 5 anstelle des in Fig. 1 gezeigten Planarantriebssystems 10 ein anderes Antriebssystem wie beispielsweise ein lineares Transportsystem umfasst. Sämtliche im Folgenden für das Planarantriebssystem 10 dargelegten Eigenschaften und Merkmale können entsprechend auch in einem linearen Transportsystem oder in einem anders ausgestalteten Antriebssystem 5 zum Einsatz kommen.

Die Statormodule 12 können optional Magnetfeldsensoren 16 umfassen, wobei mittels der Magnetfeldsensoren 16 eine Position der Magneteinheiten 51 und damit des Läufers 50 erfasst werden kann. Es können auch alternative Positionssensoren vorgesehen sein, die eine Erfassung einer Position des Läufers 50 basierend auf ein anderes Messprinzip erlauben. Die Magnetfeldsensoren 16 können Hall-Sensoren, insbesondere 3D-Hall-Sensoren aufweisen.

Das Steuerungssystem 30 umfasst optional eine erste Steuereinheit 31 mit einer ersten Recheneinheit 33 und eine zweite Steuereinheit 32 mit einer zweiten Recheneinheit 34. Die erste Steuereinheit 31 kann dann insbesondere zur Steuerung des Antriebssystems 5 dienen und die Positionsinformation des Läufers bereitstellen, beispielsweise mittels der Magnetfeldsensoren 16. Die zweite Steuereinheit 32 kann die Positionsinformation einlesen, das anzuzeigende Objekt mit dem Läufer 50 verknüpfen, die anzuzeigende Projektion anhand der Positionsinformation des Läufers 50 und des anzuzeigenden Objekts rendern und die gerenderte Projektion an die optische Projektionseinheit 100 ausgeben. Hierzu sind die erste Steuereinheit 31, die zweite Steuereinheit 32, die Statormodule 12 und die optische Projektionseinheit 100 untereinander mit einem Kommunikationsbus 35 verbunden. Der Kommunikationsbus 35 kann optional echtzeitfähig sein, so dass keine Unterbrechungen in den Verfahrensschritten aufkommen. Außerdem kann der Kommunikationsbus 35 einen bekannten Bus wie beispielsweise EtherCAT umfassen. In Fig. 1 ist ferner dargestellt, dass der Kommunikationsbus 35 mit allen Statormodulen 12 verbunden ist. Alternativ ist ebenfalls denkbar, den Kommunikationsbus 35 nur mit einem Statormodul 12 zu verbinden, wenn die Statormodule 12 ferner eine Kommunikationsverbindung untereinander aufweisen. Alternativ (nicht in Fig. 1 gezeigt) kann das Steuerungssystem 30 auch nur eine Recheneinheit umfassen, wobei die Recheneinheit dann sowohl die Aufgaben der ersten Recheneinheit 33 als auch der zweiten Recheneinheit 34 übernehmen kann.

Alternativ zur Darstellung der Fig. 1 kann ein Statormodul 12 jeweils vier Statoreinheiten 13 umfassen, wobei die vier Statoreinheiten 13 innerhalb eines Statormoduls 12 in einer quadratischen zwei-auf-zwei-Anordnung angeordnet sind. Ferner können die Statoreinheiten 13 Spulengruppen 14 umfassen, wobei die Spulengruppen 14 mit unterschiedlicher Ausrichtung angeordnet sein können. Die Spulengruppen 14 dienen zum Erzeugen eines Statormagnetfelds. Die Spulengruppen 14 können als rechteckige und längsgestreckte Spulengruppen 14 ausgestaltet sein. In jeder Statoreinheit 13 der Statormodule 12 können jeweils drei einzelne, rechteckige und längsgestreckte Spulen einer Spulengruppe 14 angeordnet sein. Ebenso könnte bei einer weiteren Ausführungsform eine andere Anzahl an einzelnen rechteckigen und längsgestreckten Spulen eine Spulengruppe 14 bilden. Es können ferner mehrere Spulengruppen 14 übereinander angeordnet sein, die in Bezug auf ihre Längserstreckung jeweils eine um 90° gedrehte Orientierung aufweisen. Dieses Raster aus längserstreckten und rechteckigen Spulen einer Spulengruppe 14 kann mehrfach übereinander ausgebildet sein. Die Spulengruppen 14 können bei entsprechender Bestromung mit den Magneteinheiten 51 wechselwirken und dadurch den Läufer 50 innerhalb des Planarantriebssystems 10 oberhalb der Statorfläche 15 bewegen. Durch die Statorfläche 15 ist also eine Bewegungsebene für den Läufer 50 definiert. Die Spulengruppen 14 können parallel zu Außenkanten der Statormodule 12 angeordnet sein. Weisen die Statormodule 12 jeweils im 90° Winkel zueinanderstehende Außenkanten auf, sind also zwei verschiedene Ausrichtungen der Spulengruppen 14 für die Bewegung des Läufers 50 möglich und notwendig. Die Magneteinheiten 51 können parallel zu Läuferaußenkanten des Läufers 50 angeordnet sein. Ferner können die Magneteinheiten 51 innerhalb des Läufers 50 an den Läuferaußenkanten umlaufend angeordnet sein und können jeweils mit den Spulengruppen 14 wechselwirken, um den Läufer parallel zu den Außenkanten der Statormodule 12 zu bewegen. Ferner ist eine Überlagerung zweier zu den Außenkanten parallelen Bewegungen möglich, so dass der Läufer 50 in alle Richtungen parallel zur Statorfläche 15 bewegt werden kann. Die Anordnung von vier Statoreinheiten 13 innerhalb eines Statormoduls 12 entspricht den von der Beckhoff Automation GmbH & Co KG unter dem Namen XPlanar vertriebenen Statormodulen 12 für ein Planarantriebssystem 10. Es kann alternativ vorgesehen, auch mehr oder weniger Statoreinheiten 3 innerhalb eines Statormoduls 2 anzuordnen. Beispielsweise kann jedes Statormodul 2 nur eine Statoreinheit 3 umfassen oder mehr als vier Statoreinheiten 3 umfassen und ist beispielsweise in der Offenlegungsschrift DE 10 2017 131 304 A1 beschrieben.

Die weiteren Figuren enthalten gegebenenfalls die im Zusammenhang mit Figur 1 erläuterten Bezugszeichen. In der weiteren Beschreibung wird gegebenenfalls auf diese Bezugszeichen nicht weiter eingegangen, da die mit diesen Bezugszeichen beschriebenen Teile des Planarantriebssystems 1 im Zusammenhang mit Figur 1 erläutert wurden.

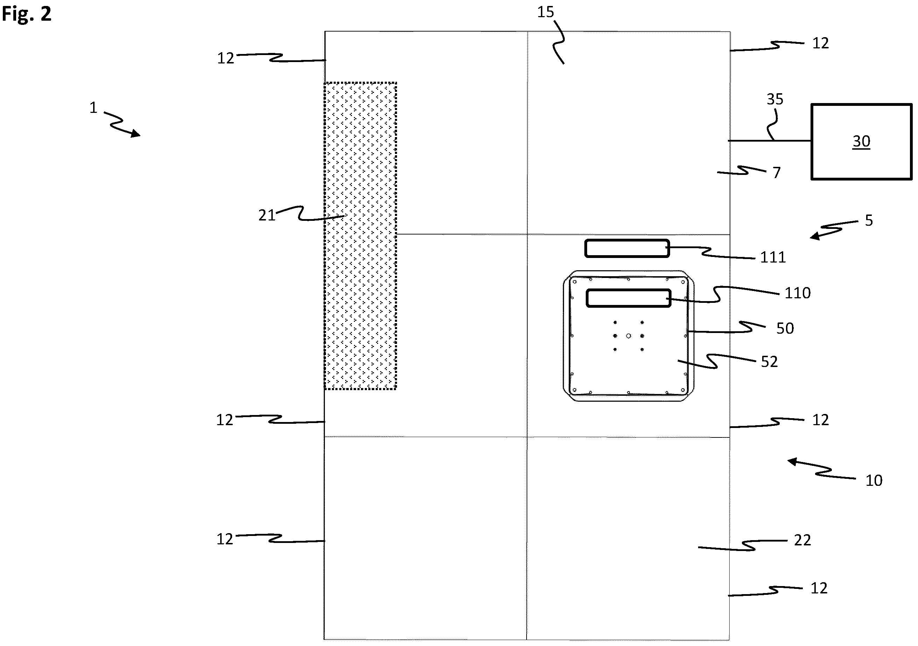

Fig. 2 zeigt eine Draufsicht auf das Automatisierungssystem 1 der Fig. 1, wobei die optische Projektionseinheit 100 nicht dargestellt ist. Auf einer Läuferfläche 52 oder dessen Aufbauten und/oder Transportgüter ist eine gerenderte Projektion 110 in Form eines Rechtecks dargestellt, wobei das Rechteck ein Platzhalter für die auszugebende Information darstellen soll. Ferner ist eine alternative gerenderte Projektion 111 auf der Statorfläche 15 dargestellt. Es kann vorgesehen sein, dass sowohl die gerenderte Projektion 110 als auch die alternative gerenderte Projektion 111 ausgegeben werden. Die Statorfläche 15 umfasst ferner sechs Statormodule 12, wobei auch eine andere Anzahl von Statormodulen 12 vorgesehen sein kann.

Die gerenderte Projektion 110 und auch die alternative gerenderte Projektion 111 können dabei derart gerendert sein, dass das anzuzeigende Objekt mit einer realen Messgröße, insbesondere einer realen Messgröße des Antriebssystems 5, verknüpft sind. Beispielsweise kann die gerenderte Projektion 110 und/oder die alternative gerenderte Projektion 111 eine Beladung des Läufers 50 anzeigen, beispielsweise indem die gerenderte Projektion 110 und/oder die alternative gerenderte Projektion 111 einen Zahlenwert einer Masse des Läufers beinhalten oder indem gerenderte Projektion 110 und/oder die alternative gerenderte Projektion 111 eine farbliche Codierung für die Beladung des Läufers 50 umfassen (beispielsweise: grün für unbeladen, rot für vollbeladen und gelb für beladen, aber nicht bis zur Kapazitätsgrenze). Eine mittels der gerenderten Projektion 110 beziehungsweise der alternativen gerenderten Projektion 111 wiedergegebene Information kann von einem menschlichen Bediener oder Überwacher des Automatisierungssystems 1 also einfach wahrgenommen werden, ohne den Blick vom Automatisierungssystem 1 abwenden zu müssen.

Eine weitere optionale Darstellungsmöglichkeit ist in Fig. 2 gezeigt. Die Statorfläche 15 ist in einen ersten Bereich 21 und einen zweiten Bereich 22 unterteilt, wobei der erste Bereich 21 beispielsweise in einer anderen Farbe beleuchtet sein kann als der zweite Bereich 22. Dies kann beispielsweise auf eine Temperatur der Statormodule 12 oder von Teilen der Statormodule 12 wiedergeben. Beispielsweis könnte die Temperatur im ersten Bereich 21 erhöht sein und der erste Bereich deshalb rot ausgeleuchtet werden. Der zweite Bereich könnte keine erhöhte Temperatur aufweisen und deshalb grün ausgeleuchtet oder gar nicht ausgeleuchtet werden. In diesem Fall kann es vorgesehen sein, dass die Läufer 50 vornehmlich im zweiten Bereich 22 bewegt werden, was durch einen menschlichen Bediener oder Überwacher einfach überprüft werden kann, ohne den Blick vom Automatisierungssystem 1 abwenden zu müssen.

Die anzuzeigenden Objekte können dabei insbesondere physikalische Messgrößen wie Temperaturen der Statormodule 12 beziehungsweise der Spulengruppen 14, Energieverbräuche während eines Antriebs des Läufers 50, auf einen Läufer 50 wirkende Kräfte oder ein Gewicht einer Beladung eines Läufers 50 sein. Ferner können die anzuzeigenden Objekte auch aus der physikalischen Messgröße berechnete Werte umfassen.

Zusätzlich oder anstelle des ersten Bereichs 21 beziehungsweise des zweiten Bereichs 22 kann vorgesehen sein, mittels der optischen Projektionseinheit 100 eine Übersichtskarte beziehungsweise Begrenzungslinien auf die Statorfläche 15 zu projizieren. Ein menschlicher Bediener oder Überwacher kann dann einfach überprüfen, ob diese Begrenzungslinien oder durch die Übersichtskarte vorgegebene Begrenzungen eingehalten werden. Ferner kann der menschliche Bediener oder Überwacher auch ein Eingabegerät bedienen und damit Bewegungen eines Läufers 50 steuern und dabei die Begrenzungslinien oder durch die Übersichtskarte vorgegebene Begrenzungen einhalten, da er diese visuell wahrnehmen kann.

Ein wie in den Fig. 1 und 2 gezeigt ausgestaltetes Automatisierungssystem 1 kann also folgendermaßen betrieben werden: Zunächst wird eine Positionsinformation eines Läufers 50 ermittelt und ein anzuzeigendes Objekt mit der Position des Läufers 50 verknüpft. Diese Schritte können gleichzeitig oder hintereinander in einer beliebigen Reihenfolge ausgeführt werden. Anschließend wird eine von der optischen Projektionseinheit 100 anzuzeigende Projektion anhand der Positionsinformation des Läufers 50 und des anzuzeigenden Objekts gerendert und die gerenderte Projektion 110 beziehungsweise die alternative gerenderte Projektion 111 an die optische Projektionseinheit 100 ausgegeben, so dass die optischen Projektionseinheit 100 die gerenderte Projektion 110, 111 auf einer Oberfläche 7 und/oder auf dem Läufer 50 oder dessen Aufbauten und/oder Transportgüter des Antriebssystems 5 ausgibt.

Die Positionsinformation kann optional anhand einer Position des Läufers 50 ermittelt werden, beispielsweise mittels den Magnetfeldsensoren 16. Die Position des Läufers 50 kann dabei relativ zum Automatisierungssystem 1 beziehungsweise relativ zum Antriebssystem 5, beispielsweise dem Planarantriebssystem 10, und insbesondere auch relativ zu einer Komponente des Antriebssystems 5 wie beispielsweise einer Statoreinheit 13 ermittelt werden.

In einem Ausführungsbeispiel wird die Position des Läufers 50 zumindest doppelt so häufig, insbesondere dreimal so häufig, ermittelt wird wie die gerenderte Projektion 110, 111 gerendert wird. Dies ermöglicht eine echtzeitfähige Umsetzung, da die Positionsinformation mit einer besseren zeitlichen Auflösung bestimmt wird verglichen mit einer Bildwiederholungsrate der optischen Projektionseinheit 100. Dadurch kann insbesondere erreicht werden, dass sämtliche Bewegungen des Läufers 50 in eine passende gerenderte Projektion 110 beziehungsweise alternative gerenderte Projektion 111 umgesetzt werden, bei denen sich das anzuzeigende Objekt unmittelbar mit dem Läufer 50 mitbewegt.

In einem Ausführungsbeispiel wird die gerenderte Projektion 110 beziehungsweise die alternative gerenderte Projektion 111 derart gerendert, dass sich das anzuzeigende Objekt mit dem Läufer 50 mitbewegt und eine Relativposition zwischen dem Läufer 50 und dem anzuzeigenden Objekt fixiert ist. Dies bedeutet, dass sich der Läufer 50 in der Darstellung der Fig. 2 über die Statorfläche 15 bewegen kann und dabei die gerenderte Projektion 110 beziehungsweise die alternative gerenderte Projektion 111 mit dem Läufer 50 derart mitbewegt werden, dass die gerenderte Projektion 110 beziehungsweise die alternative gerenderte Projektion 111 immer relativ zum Läufer 50 an einer identischen Position angeordnet sind.

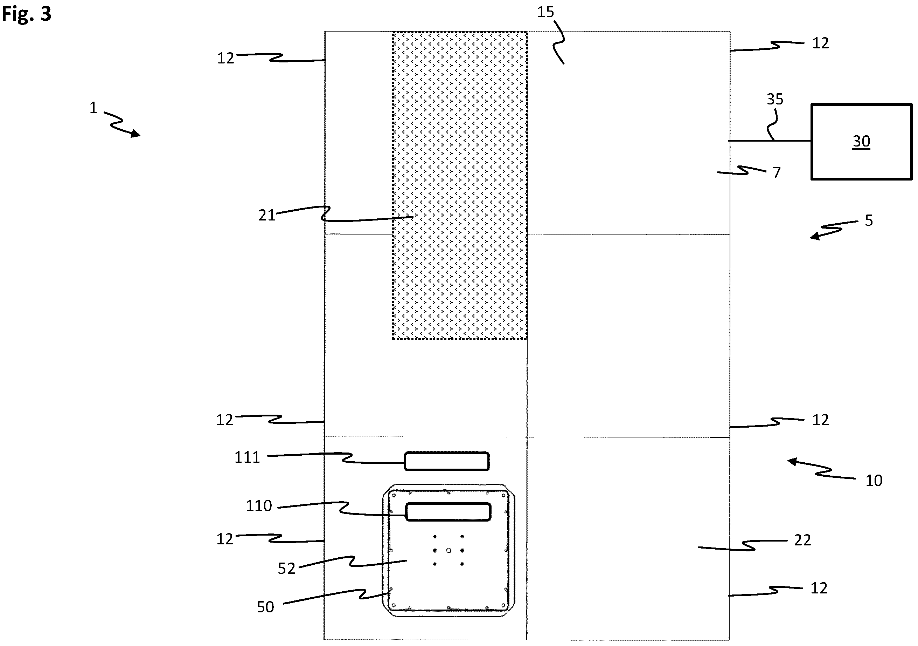

Fig. 3 zeigt eine weitere Draufsicht auf das Automatisierungssystem 1 der Fig. 1 beziehungsweise 2, bei der der Läufer 50 bewegt und die gerenderte Projektion 110 beziehungsweise die alternative gerenderte Projektion 111 mit dem Läufer 50 mitbewegt wurden, so dass die Relativposition identisch geblieben ist.

In den Darstellungen der Fig. 2 und 3 wird das anzuzeigende Objekt und damit die gerenderte Projektion 110 auf den Läufer 50 oder dessen Aufbauten und/oder Transportgüter projiziert oder das anzuzeigende Objekt und damit die alternative gerenderte Projektion 111 neben den Läufer 50 mit einem vorgegebenen Abstand zum Läufer 50 projiziert. Wie bereits beschrieben kann auch nur entweder die gerenderte Projektion 110 oder die alternative gerenderte Projektion 111 projiziert werden.

In einem Ausführungsbeispiel des Verfahrens wird das Ermitteln der Positionsinformation, das Rendern der anzuzeigenden Projektion sowie das Ausgeben der gerenderten Projektion 110 beziehungsweise der alternativen gerenderten Projektion 111 zumindest nach jeder Ortsveränderung des Läufers 50 erneut durchgeführt.

Ferner sind der erste Bereich 21 und der zweite Bereich 22 in Fig. 3 anders angeordnet als in Fig. 2. Dies kann beispielsweise durch eine Änderung der Temperaturverteilung der Statormodule 12 verursacht sein, da nun gegebenenfalls andere Bereiche der Statorfläche 15 eine erhöhte Temperatur aufweisen.

In einem Ausführungsbeispiel wird eine Anzeigeinformation über eine Schnittstelle 36, wie beispielsweise in Fig. 1 gezeigt, eingelesen und das anzuzeigende Objekt anhand der Anzeigeinformation eingestellt.

In einem Ausführungsbeispiel beinhaltet die Positionsinformation einen Abstand einer Läuferfläche 52 von der Oberfläche 7. Beim Rendern der anzuzeigenden Projektion wird der Abstand berücksichtigt. Dies ermöglicht beispielsweise eine Flughöhe des Läufers 50 im Planarantriebssystem 10 zu berücksichtigen. Je höher der Läufer 50 fliegt, umso kleiner kann die gerenderte Projektion 110 ausfallen, um auf dem Läufer 50 beziehungsweise der Läuferfläche 52 oder dessen Aufbauten und/oder Transportgüter mit identischer Größe angezeigt zu werden.

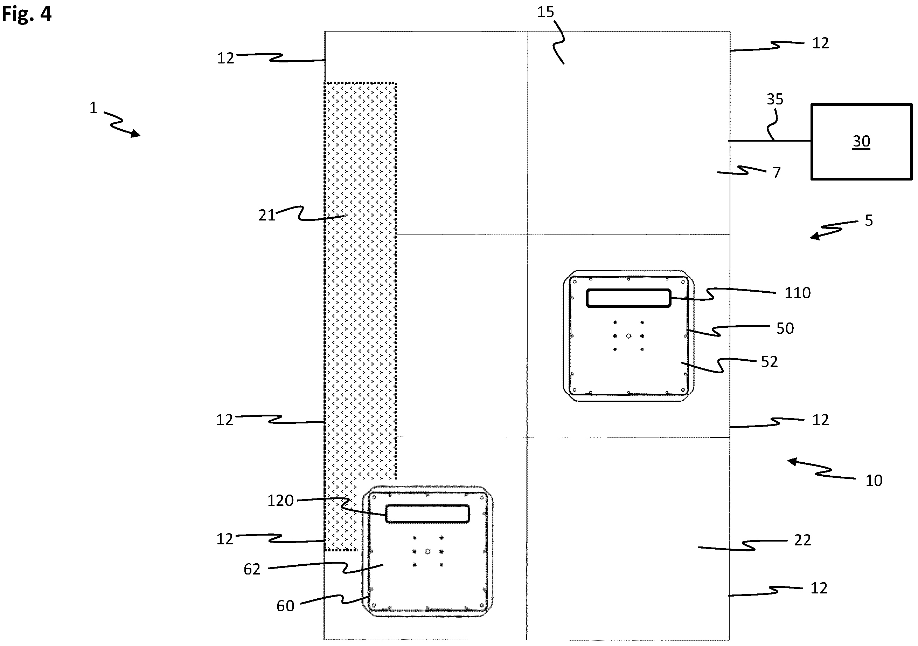

Fig. 4 zeigt eine Draufsicht auf das Automatisierungssystem 1 der Fig. 1 bis 3 und entspricht der Darstellung der Fig. 2, sofern im Folgenden keine Unterschiede beschrieben sind. Auch in diesem Beispiel sind der erste Bereich 21 und der zweite Bereich 22 wieder unterschiedlich angeordnet, verglichen mit den Darstellungen der Fig. 2 und 3. Für den Läufer 50 ist nur eine gerenderte Projektion 110 eingezeichnet, die auf der Läuferfläche 52 oder dessen Aufbauten und/oder Transportgüter angezeigt wird. Ferner ist ein weiterer Läufer 60 oberhalb der Statorfläche 15 angeordnet, der in seinem Aufbau dem Läufer 50 entsprechen kann. Der weitere Läufer 60 weist also eine weitere Läuferfläche 62 mit Aufbauten und/oder Transportgütern auf, und ferner weitere Magneteinheiten, mit denen der mittels den Spulengruppen 14 antreibbar ist. Die weiteren Magneteinheiten sind in der Darstellung der Fig. 4 jedoch nicht sichtbar. Eine weitere gerenderte Projektion 120 ist auf der weiteren Läuferfläche 62 oder dessen Aufbauten und/oder Transportgütern angeordnet. Alle im Zusammenhang mit der gerenderten Projektion 110 für den Läufer 50 erläuterten Merkmale und Verfahrensschritte können für den weiteren Läufer 60 wiederholt und damit die weitere gerenderte Projektion 120 erstellt und angezeigt werden.

In der Darstellung der Fig. 4 ist der weitere Läufer 60 teilweise im ersten Bereich 21 der Statorfläche 15 angeordnet. Ein menschlicher Bediener oder Überwacher kann sofort erkennen, dass dies der Fall ist, wenn der erste Bereich 21 beispielsweise aufgrund seiner Temperatur rot eingefärbt ist. In diesem Fall kann der menschliche Bediener oder Überwacher entscheiden, ob ein Eingriff seinerseits notwendig ist oder ob eine Bewegung des weiteren Läufers 60 im ersten Bereich (noch) toleriert werden kann. Dies kann erfolgen, ohne den Blick vom Automatisierungssystem 1 abwenden zu müssen.

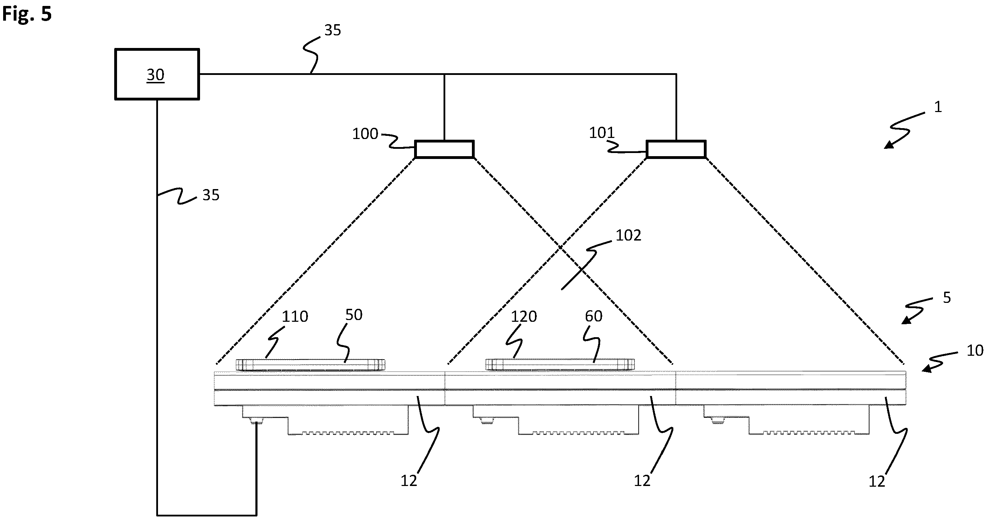

Fig. 5 zeigt eine Seitenansicht eines weiteren Automatisierungssystems 1, das dem Automatisierungssystem 1 der Fig. 1 bis 4 entspricht, sofern im Folgenden keine Unterschiede beschrieben sind. Das Antriebssystem 5 ist wiederum ein Planarantriebssystem 10 und weist drei Statormodule 12 auf, die nebeneinander angeordnet sind. Es kann offenbleiben, wie viele Statormodule 12 in die Zeichenebene hinein hintereinander angeordnet sind. Ferner ist ein Läufer 50 mit einer gerenderten Projektion 110 und ein weiterer Läufer 60 mit einer weiteren gerenderten Projektion 120 dargestellt. Das Steuerungssystem 30 ist vereinfacht dargestellt und kann wie im Zusammenhang mit Fig. 1 erläutert ausgestaltet sein.

Das Automatisierungssystem 1 umfasst eine weitere optische Projektionseinheit 101. Diese ist ebenfalls mittels des oder eines weiteren Kommunikationsbusses 35 an das Steuerungssystem 30 angeschlossen. Vor dem Rendern der anzuzeigenden Projektion wird anhand der Positionsinformation festgestellt, ob die gerenderte Projektion 110, 120 von der optischen Projektionseinheit 100 und/oder von der weiteren optischen Projektionseinheit 101 projiziert werden soll. Im Falle der Darstellung der Fig. 5 ergibt sich dabei, dass die gerenderte Projektion 110 von der optischen Projektionseinheit 100 dargestellt werden muss, da der Läufer 50 außerhalb des Anzeigebereichs (gestrichelt angedeutet) der weiteren optischen Projektionseinheit 101 ist. und die weitere gerenderte Projektion 120 von der optischen Projektionseinheit 100 und der weiteren optischen Projektionseinheit 101 dargestellt werden kann, so dass zur Darstellung der weiteren gerenderten Projektion 120 die optische Projektionseinheit 100 und/oder die weitere optische Projektionseinheit 101 ausgewählt werden kann. Dies wird beim Rendern der anzuzeigenden Projektion berücksichtigt. Die weitere optische Projektionseinheit 101 kann dabei analog zur optischen Projektionseinheit 100 ausgestaltet sein.

In einem Ausführungsbeispiel wird in einem Automatisierungssystem 1 wie in Fig. 5 dargestellt in einem Übergangsbereich 102 die weitere gerenderte Projektion 120 sowohl von der optischen Projektionseinheit 100 als auch von der weiteren optischen Projektionseinheit 101 projiziert. Befindet sich der Läufer 50 anstelle des weiteren Läufers 60 im Übergangsbereich 102, kann auch die gerenderte Projektion 110 sowohl von der optischen Projektionseinheit 100 als auch von der weiteren optischen Projektionseinheit 101 projiziert werden. Dies ermöglicht Übergange des Läufers 50 beziehungsweise des weiteren Läufers 60 zwischen den Anzeigebereichen der optischen Projektionseinheiten 100, 101, ohne dass die Projektion unterbrochen werden muss.

Sind mehrere optische Projektionseinheiten 100, 101 vorgesehen, kann es vorgesehen sein, dass eine zweite Steuereinheit 32 die Berechnungen für alle optischen Projektionseinheiten 100, 101 übernimmt oder dass für jede optische Projektionseinheit 100, 101 eine eigene zweite Steuereinheit 32 verwendet wird. Ferner kann vorgesehen sein, dass die optische Projektionseinheit 100 beziehungsweise die weitere optische Projektionseinheit 101 eine andere Anzahl von Statormodulen 12 im jeweiligen Anzeigebereich hat.

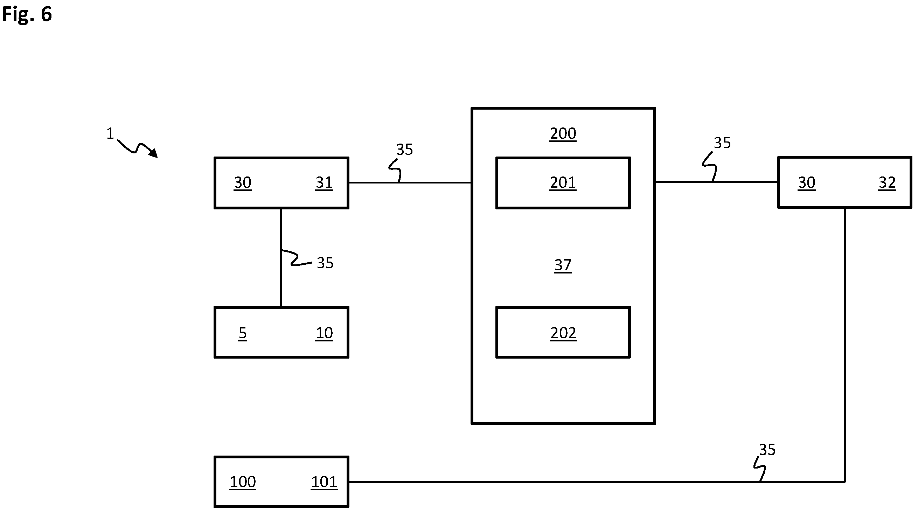

Fig. 6 zeigt eine schematische Darstellung eines Automatisierungssystems 1, bei dem ein Antriebssystem 5 ein Planarantriebssystem 10 mit einem Läufer 50 beziehungsweise weiterem Läufer 60 sein kann, bei dem das Steuerungssystem 30 eine erste Steuereinheit 31 und eine zweite Steuereinheit 32 aufweist und bei dem eine optische Projektionseinheit 100 und gegebenenfalls eine weitere optische Projektionseinheit 101 vorgesehen sind. Das Automatisierungssystem 1 weist ferner einen virtuellen Figurenraum 200 auf, der mittels einer dritten Steuereinheit 37 realisiert sein kann. Alternativ kann der virtuelle Figurenraum 200 auch der ersten Steuereinheit 31 oder der zweiten Steuereinheit 32 zugeordnet sein.

Die anzuzeigende Projektion wird zunächst im virtuellen Figurenraum 200 anhand eines virtuellen Objekts 201 berechnet und anschließend für einen Realraum gerendert. Das virtuelle Objekt 201 kann dabei den Läufer 50 beziehungsweise den weiteren Läufer 60 umfassen und neben der physischen Ausgestaltung des Läufers 50 beziehungsweise des weiteren Läufers 60 zusätzlich die im Zusammenhang mit dem Läufer 50 beziehungsweise dem weiteren Läufer 60 anzuzeigenden Informationen umfassen. Der Realraum kann beispielsweise als virtuelles Sichtfenster 202 auf den Figurenraum 200 ausgestaltet sein. Durch die ausgegebene gerenderte Projektion 110, 111 des Sichtfensters 202 werden die Erfassung und/oder Wahrnehmung des Läufers 50 beziehungsweise des weiteren Läufers 60 und/oder der Oberfläche 7 angereichert. Das virtuelle Sichtfenster 202 kann dabei an die zweite Steuereinheit 32 weitergebenen werden, um so die gerenderte Projektion 110 beziehungsweise alternative gerenderte Projektion 111 beziehungsweise weitere gerenderte Projektion 120 anhand des virtuellen Sichtfensters 202 zu erzeugen. Es kann vorgesehen sein, dass die Position des Läufers 50 beziehungsweise des weiteren Läufers 60 relativ zum Figurenraum 200 bestimmt wird.

Der Figurenraum dient dabei einer Verschmelzung der Darstellung des realen Antriebssystems 5 mit den weiteren, ebenfalls anzuzeigenden Informationen und kann dadurch eine angepasste oder angereicherte Realität (augmented reality. AR) des Automatisierungssystems 1 umfassen.

In einem Ausführungsbeispiel umfasst der Figurenraum 200 verschiedene Elemente. Vor diesen wird eines mittels einer Information aus dem Steuersystem 30 und/oder dem Automatisierungssystem 1 als anzuzeigendes Objekt ausgewählt und beim Rendern der anzuzeigenden Projektion das ausgewählte Element berücksichtigt. Dadurch können im Figurenraum 200 mehrere anzuzeigende Elemente berücksichtigt werden, wobei nur eines schlussendlich für die Anzeige ausgewählt wird. Dies ermöglicht ein effizientes Berechnungsverfahren, wenn das ausgewählte Element geändert werden soll, da bereits für alle Elemente ausreichend Information vorliegt.

In einem Ausführungsbeispiel ist dem anzuzeigenden Objekt im Figurenraum 200 eine Eigenschaft zugeordnet. Das Element wird anhand dieser Verknüpfung ausgewählt. Dies ermöglicht eine weitere Vereinfachung der Berechnung. Die Eigenschaft kann sich dabei auf eine Darstellungsart beziehen. Beispielsweise kann dem anzuzeigenden Objekt die Eigenschaft "Beladung" zugeordnet sein, wobei die Beladung dann als numerischer Wert ausgegeben werden soll. In einem anderen Beispiel ist dem anzuzeigenden Objekt die Eigenschaft "Temperatur" zugeordnet, die mit den bereits beschriebenen Ausleuchtungen in verschiedenen Farben dargestellt werden kann.

In einem Ausführungsbeispiel wird das virtuelle Objekt 201 im Figurenraum 200 anhand der Positionsinformation des Läufers 50 beziehungsweise des weiteren Läufers 60 bewegt. Auch dies ermöglicht eine weitere Vereinfachung der Berechnung.

Sind mehrere optische Projektionseinheiten 100, 101 vorgesehen, kann es vorgesehen sein, dass eine zweite Steuereinheit 32 die Berechnungen für alle optischen Projektionseinheiten 100, 101 übernimmt oder dass für jede optische Projektionseinheit 100, 101 eine eigene, mit dem Figurenraum 200 verbundene, zweite Steuereinheit 32 verwendet wird.

Die erste Steuereinheit 31 kann dabei mindestens ein Datum zur Geschwindigkeits- und/oder Ortsvorgabe an das Antriebssystem 5 senden. Nachdem der Läufer 50 anhand dieser Geschwindigkeits- und/oder Ortsvorgabe bewegt wurde, kann das Antriebssystem aktuelle Geschwindigkeits- und/oder Ortsdaten des Läufers 50 an die erste Steuereinheit 31 senden. Die Geschwindigkeits- und/oder Ortsdaten des Läufers 50 können dabei beispielsweise mittels der Magnetfeldsensoren 16 oder mit anderen Positionssensoren ermittelt oder aus den Daten solcher Positionssensoren beziehungsweise Magnetfeldsensoren berechnet werden. Die Kommunikation zwischen dem Antriebssystem 5 und der ersten Steuereinheit 31 kann mittels des Kommunikationsbusses 35 erfolgen, der beispielsweise in Form eines echtzeitfähigen Feldbusses beispielweise EtherCAT realisiert sein kann.

Ein mit dem Kommunikationsbus 35 verknüpfter Bustreiber, beispielsweise ein Feldbustreiber, des Automatisierungssystems 1 kann die vom Antriebssystem 5 empfangenden Daten unmittelbar mittels einer Recheneinheit, welche den Figurenraum berechnet und verwaltet, als Eigenschaften (Properties) des virtuellen Objektes 201 an ein Softwaremodul des Figurenraums 200 weiterleiten. Dieses Softwaremodul kann beispielsweise auf der dritten Steuereinheit 37, oder aber auch alternativ auf der zweiten Steuereinheit 32 betrieben werden. Sofern sich die Geschwindigkeits- und/oder Ortsdaten im Vergleich zum letzten Empfang verändert haben, bewegt sich das virtuelle Objekt 201 im Figurenraum 200 unmittelbar anhand der Geschwindigkeits- und/oder Ortsdaten.

Die optische Projektionseinheit 100 projiziert Informationen aus dem Figurenraum 200 mit einer vorgegebenen Wiederholungsfrequenz, die insbesondere die natürliche Wahrnehmung des Antriebssystems 5 oder des Läufers 50 und 60 nicht stört. Eine Kommunikationsgeschwindigkeit und eine Datenrate des oder eines weiteren Kommunikationsbusses 35 zwischen der zweiten Steuereinheit 32 und der optischen Projektionseinheit 100 kann mindestens der vorgegebenen Wiederholungsfrequenz entsprechen. Weisen die optische Projektionseinheit 100 und die weitere optische Projektionseinheit 101 unterschiedliche Wiederholungsraten auf, kann es sinnvoll sein, für die optische Projektionseinheit 100 und für die weitere optische Projektionseinheit 101 jeweils eine eigene zweite Steuereinheit 32 vorzusehen. Die Ausgabe der gerenderten Projektion 110 beziehungsweise der alternativen gerenderten Projektion 111 beziehungsweise der weiteren gerenderten Projektion 120 erfolgt dabei unter Berücksichtigung der Wiederholungsfrequenz der zugehörigen optischen Projektionseinheit 100 beziehungsweise weiteren optischen Projektionseinheit 101.

Die zweite Steuereinheit 32 kann dabei Daten aus dem Figurenraum 200 mindestens mit der Wiederholungsrate der optischen Projektionseinheit 100 beziehungsweise der weiteren optischen Projektionseinheit 101 empfangen, daraus einen Bilddatenstream rendern und diesen unmittelbar an die optische Projektionseinheit 100 beziehungsweise die weitere optischen Projektionseinheit 101 übergeben, wobei hierzu vorgegebene Kommunikationsprotokolle genutzt werden können.

Eine Applikation kann dabei in einem industriellen Umfeld (beispielsweise als Maschine, Prozessstrecke, Verarbeitungssystem), in einem Gebäude und/oder auf einer Bühne zum Einsatz kommen und in Verbindung mit einem Automatisierungssystem 1 stehen.

Die im Folgenden erläuterten Beispiele können sowohl unter Verwendung des Figurenraums 200, wie im Zusammenhang mit Fig. 6 erläutert, als auch für die Ausgestaltungen der Fig. 1 bis 5 zum Einsatz kommen.

Es kann ferner vorgesehen sein, dass das anzuzeigende Objekt zumindest eine Foto-Datei umfasst, wobei die gerenderte Projektion 110 beziehungsweise die alternative gerenderte Projektion 111 beziehungsweise die weitere gerenderte Projektion 120 dann ein Abbild der Foto-Datei umfassen kann. Alternativ kann das anzuzeigende Objekt eine Video-Datei umfassen, wobei die gerenderte Projektion 110 beziehungsweise die alternative gerenderte Projektion 111 beziehungsweise die weitere gerenderte Projektion 120 dann einen Ablauf des Videos der Video-Datei umfassen kann. Ferner kann das anzuzeigende Objekt eine Grafik-Datei umfassen, die dann ebenfalls in der gerenderten Projektion 110 beziehungsweise der alternativen gerenderten Projektion 111 beziehungsweise der weiteren gerenderten Projektion 120 angezeigt werden kann. Das anzuzeigende Objekt kann ferner eine Datei oder Datenbank beinhalten, welche tabellarische Daten enthält. Die gerenderte Projektion 110 beziehungsweise die alternative gerenderte Projektion 111 beziehungsweise die weitere gerenderte Projektion 120 kann dann eine Tabelle oder ein Diagramm beinhalten, wobei das Diagramm aus den tabellarischen Daten erstellt sein kann.

Das anzuzeigende Objekt kann eine boolesche Information beinhalten, beispielsweise ermittelt aus Daten des Automatisierungssystems 1. Die gerenderte Projektion 110 beziehungsweise die alternative gerenderte Projektion 111 beziehungsweise die weitere gerenderte Projektion 120 kann dann eine Lichtfläche, mit der die boolesche Information dargestellt wird, beinhalten. Ferner kann das anzuzeigende Objekt eine numerische oder textuelle Information aus dem Automatisierungssystem 1 beinhalten, die in der gerenderten Projektion 110 beziehungsweise der alternativen gerenderten Projektion 111 beziehungsweise der weiteren gerenderten Projektion 120 in Form eines Codes bzw. Strichcodes bzw. QR-Codes wiedergegeben werden kann.

Es kann vorgesehen sein, dass anzuzeigende Objekt anhand einer Störmeldung aus dem Automatisierungssystem 1 gezielt zu verändern. Dies kann insbesondere den Inhalt der anzuzeigenden Projektion und deren Eigenschaften, wie Größe, Position, Ausrichtung, Farbe und/oder Fokus umfassen. Alternativ oder zusätzlich kann das anzuzeigende Objekt anhand eines Datums der Produktionsdaten aus dem Automatisierungssystem 1 oder wenigsten einem Unternehmensressourcenplanungssystem (Enterprise-Resource-Planning-System, ERP-System) gezielt verändert werden. Dies kann ebenfalls den Inhalt der Projektion und deren Eigenschaften, wie Größe, Position, Ausrichtung, Farbe und/oder Fokus beinhalten.

Mittels wenigstens einer Produktionsinformation des Automatisierungssystems 1 oder wenigstens einem ERP-System kann die anzuzeigende Projektion mit diesen Daten umfassen. Die Informationen können auch mittels Codierung für externe Systeme maschinenlesbar bereitgestellt werden. Ferner kann vorgesehen sein, dass die gerenderte Projektion 110 beziehungsweise alternative gerenderte Projektion 111 beziehungsweise weitere gerenderte Projektion 120 in Farbe und/oder Größe und/oder Transparenz und/oder Schriftform und /oder graphischem Inhalt anhand dieser Daten angepasst wird.

Mittels wenigstens einer Positionsinformation von wenigstens einem Läufer 50 beziehungsweise einem weiteren Läufer 60 kann die anzuzeigende Projektion die kommende und/oder vergangene Streckennutzung auf wenigstens einem Statormodul 12 oder Teilen der Statorfläche 15 beinhalten. Dies kann beispielsweise analog zu den in Fig. 2 beschriebenen ersten Bereichen 21 und zweiten Bereichen 22 farbig codiert dargestellt werden. Ferner kann mittels wenigstens einer Positionsinformation von wenigstens einem Läufer 50 beziehungsweise einem weiteren Läufer 60 die gerenderte Projektion 110 beziehungsweise die alternative gerenderte Projektion 111 beziehungsweise die weitere gerenderte Projektion 120 Initialisierungspositionen und/oder Einrichtungspositionen auf wenigstens einem Statormodul 12 darstellen.

Mittels wenigstens einer booleschen und/oder numerischen Information aus dem Automatisierungssystem 1 kann die anzuzeigende Projektion Streckenbegrenzungen und/oder Streckenführungen beinhalten. Dabei kann von einem menschlichen Bediener oder Überwacher des Automatisierungssystems 1 einfach visuell überprüft werden, ob diese eingehalten werden, ohne den Blick vom Automatisierungssystem 1 abwenden zu müssen.

Mittels wenigstens einer Positionsinformation von wenigstens einem Läufer 50 beziehungsweise einem weiteren Läufer 60 kann die anzuzeigende Projektion wenigstens eine optimierte Strecke auf wenigstens einem Statormodul 12 beinhalten.

Das anzuzeigende Objekt kann eine aus einer Geschwindigkeitsinformation und einer Streckendistanz berechnete Restzeit für einen Läufer 50 beziehungsweise einen weiteren Läufer 60 eines Automatisierungssystems 1 umfassen. Die Restzeit kann insbesondere angeben wie lange es noch dauert, bis ein vorgegebenes Statormodul 12 befahren wird. Die anzuzeigende Projektion kann diese Restzeit farblich und/oder textuell und/oder grafisch codiert beinhalten.

Mittels wenigstens einer booleschen und/oder numerischen Information aus wenigstens einem Automatisierungssystem 1 kann die gerenderte Projektion 110 beziehungsweise die alternative gerenderte Projektion 111 beziehungsweise die weitere gerenderte Projektion 120 sicherheitstechnisch relevante Bereiche wie beispielsweise den ersten Bereich 21 oder den zweiten Bereich 22 beinhalten.

Mittels wenigstens einer booleschen und/oder numerischen Information aus wenigstens einem Automatisierungssystem 1 kann die gerenderte Projektion 110 beziehungsweise die alternative gerenderte Projektion 111 beziehungsweise die weitere gerenderte Projektion 120 den aktuellen Status und/oder Betriebszustand von wenigstens einem Automatisierungssystem 1 und/oder einem Element des Automatisierungssystems 1 wie beispielswiese eines Statormoduls 12 und/oder eines Läufers 50 oder eines weiteren Läufers 60 beinhalten.

Mittels wenigstens einer numerischen Information aus wenigstens einem Automatisierungssystem 1 kann die gerenderte Projektion 110 beziehungsweise die alternative gerenderte Projektion 111 beziehungsweise die weitere gerenderte Projektion 120 wenigstens eine Koordinate beinhalten.

Mittels wenigstens einer booleschen Information aus wenigstens einem Automatisierungssystem 1 kann die gerenderte Projektion 110 beziehungsweise die alternative gerenderte Projektion 111 beziehungsweise die weitere gerenderte Projektion 120 eine graphische Gruppierung durch beispielsweise eine Umrandung von wenigstens zwei Läufern 50, 60 und/oder zwei Statormodulen 12 beinhalten.

Mittels wenigstens einer thermischen Information aus wenigstens einem Antriebselement des Antriebssystems 5, beispielsweise dem Statormodul 12 und/oder wenigstens einem Läufer 50, 60 oder wenigstens einem Automatisierungssystem 1 kann die gerenderte Projektion 110 beziehungsweise die alternative gerenderte Projektion 111 beziehungsweise die weitere gerenderte Projektion 120 wenigstens eine Temperatur farbig und/oder textuell dargestellt beinhalten.

Mittels wenigstens einer energetischen Information aus wenigstens einem Antriebselement des Antriebssystems 5, beispielsweise dem Statormodul 12 und/oder wenigstens einem Läufer 50, 60 oder wenigstens einem Automatisierungssystem 1 kann die gerenderte Projektion 110 beziehungsweise die alternative gerenderte Projektion 111 beziehungsweise die weitere gerenderte Projektion 120 den aktuellen Energieverbrauch und/oder Energiereserve für die Bewegung und/oder Tragen von des Läufers 50 und/oder des Läufers 60 beinhalten.

Mittels wenigstens einer booleschen und/oder numerischen Information aus wenigstens einem Automatisierungssystem 1 kann die gerenderte Projektion 110 beziehungsweise die alternative gerenderte Projektion 111 beziehungsweise die weitere gerenderte Projektion 120 Bewegungsparameter wie Schleppfehler und/oder absolute Position und/oder relative Position und/oder Geschwindigkeit und/oder Beschleunigung und/oder Ruck des Läufers 50 beziehungsweise des weiteren Läufers 60 60 beinhalten.

Mittels wenigstens einer numerischen Information aus wenigstens einem Automatisierungssystem 1 kann die gerenderte Projektion 110 beziehungsweise die alternative gerenderte Projektion 111 beziehungsweise die weitere gerenderte Projektion 120 Kraftparameter wie beispielsweise eine auf den Läufer 50 beziehungsweise den weiteren Läufer 60 beziehungsweise auf ein Antriebselement des Antriebssystems 5 wie beispielsweise das Statormodul 12 wirkende Kraft und/oder ein auf den Läufer 50 beziehungsweise den weiteren Läufer 60 beziehungsweise auf ein Antriebselement des Antriebssystems 5 wie beispielsweise das Statormodul 12 wirkendes Drehmoment und/oder eine auf den Läufer 50 beziehungsweise den weiteren Läufer 60 beziehungsweise auf ein Antriebselement des Antriebssystems 5 wie beispielsweise das Statormodul 12 wirkende Zentrifugalkraft beinhalten.

Mittels wenigstens einer numerischen Information aus wenigstens einem Automatisierungssystem 1 kann die gerenderte Projektion 110 beziehungsweise die alternative gerenderte Projektion 111 beziehungsweise die weitere gerenderte Projektion 120 Bewegungsparameter wie beispielsweise eine Kraft und/oder ein Drehmoment und/oder eine Zentrifugalkraft beinhalten.

Mittels wenigstens einer numerischen Information aus wenigstens einem Automatisierungssystem 1 kann die gerenderte Projektion 110 beziehungsweise die alternative gerenderte Projektion 111 beziehungsweise die weitere gerenderte Projektion 120 wenigstens eine Zielposition für den Läufer 50 beziehungsweise den weiteren Läufer 60 beinhalten.

Mittels wenigstens einer numerischen oder textuellen Information aus wenigstens einem Automatisierungssystem 1 kann die gerenderte Projektion 110 beziehungsweise die alternative gerenderte Projektion 111 beziehungsweise die weitere gerenderte Projektion 120 wenigstens eine Bearbeitungsstation und/oder eine Parkstation und/oder eine Ladestation für den Läufer 50 beziehungsweise den weiteren Läufer 60 beinhalten.

Mittels numerischen Koordinateninformation, beispielsweise mittels einer x-Koordinate und einer y-Koordinate beziehungsweise einer x-Koordinate, einer y-Koordinate und einer z-Koordinate eines Automatisierungssystems 1 und/oder einer Information aus wenigstens einer externen Datenquelle kann die gerenderte Projektion 110 beziehungsweise die alternative gerenderte Projektion 111 beziehungsweise die weitere gerenderte Projektion 120 wenigstens eine Karte und/oder Navigationsrouten beinhalten.

Mittels wenigstens einer numerischen Information aus wenigstens einem Automatisierungssystem 1 kann die gerenderte Projektion 110 beziehungsweise die alternative gerenderte Projektion 111 beziehungsweise die weitere gerenderte Projektion 120 wenigstens ein Antriebselement des Antriebssystems 5, beispielsweise ein Statormodul 12 und/oder den Läufer 50 und/oder den weiteren Läufer 60 beinhalten, wobei die Bewegung der gerenderte Projektion 110 beziehungsweise die alternative gerenderte Projektion 111 beziehungsweise die weitere gerenderte Projektion 120 in Echtzeit oder reduzierter oder beschleunigter Geschwindigkeit zu den Positionsdaten und/oder Ausrichtungsdaten ausgegeben werden kann.

### Bezugszeichenliste

- 1: Automatisierungssystem
- 5: Antriebssystem
- 6: Antrieb
- 7: Fläche
- 8: Hologramm
- 10: Planarantriebssystem
- 12: Statormodul
- 13: Statoreinheit
- 14: Spulengruppe
- 15: Statorfläche
- 16: Magnetfeldsensor
- 21: erster Bereich
- 22: zweiter Bereich
- 30: Steuersystem
- 31: erste Steuereinheit
- 32: zweite Steuereinheit
- 33: erste Recheneinheit
- 34: zweite Recheneinheit
- 35: Kommunikationsbus
- 36: Schnittstelle
- 37: dritte Steuereinheit
- 50: Läufer
- 51: Magneteinheit
- 52: Läuferfläche
- 60: weiterer Läufer
- 62: weitere Läuferfläche
- 100: optische Projektionseinheit
- 101: weitere optische Projektionseinheit
- 102: Übergangsbereich
- 110: gerenderte Projektion
- 111: alternative gerenderte Projektion
- 120: weitere gerenderte Projektion
- 200: Figurenraum
- 201: virtuelles Objekt
- 202: Sichtfenster

## Patentansprüche

1. Verfahren zum Betreiben eines Automatisierungssystems (1), wobei das Automatisierungssystem (1) ein Antriebssystem (5) mit einem Läufer (50) und eine optische Projektionseinheit (100) umfasst, wobei ein Steuerungssystem (30) des Automatisierungssystems (1) die folgenden Schritte ausführt:
- Ermitteln einer Positionsinformation des Läufers (50);
- Verknüpfen des Läufers (50) mit einem anzuzeigenden Objekt, das eine Anzeigeinformation umfasst;
- Rendern einer von der optischen Projektionseinheit (100) anzuzeigenden Projektion anhand der Positionsinformation des Läufers (50) und des anzuzeigenden Objekts, wobei die anzuzeigende Projektion ein Bild erzeugt ;
- Ausgeben der gerenderten Projektion (110, 111) an die optische Projektionseinheit (100), so dass die optische Projektionseinheit (100) die gerenderte Projektion (110, 111) auf einer Oberfläche (7) und/oder auf dem Läufer (50) oder dessen Aufbauten und/oder Transportgüter des Antriebssystems (5) ausgibt
**dadurch gekennzeichnet, dass**
das Antriebssystem (5) ein Planarantriebssystem ist, das einen planaren Stator und einen in mindestens zwei Richtungen bewegbaren Läufer (50) umfasst, wobei der Läufer (50) mittels eines Antriebs (6) des Stators antreibbar ist, wobei die Positionsinformation einen Abstand einer Läuferfläche (52) von der Oberfläche (7) beinhaltet und wobei beim Rendern der anzuzeigenden Projektion der Abstand berücksichtigt wird.

2. Verfahren nach Anspruch 1, wobei die Positionsinformation anhand einer Position des Läufers (50) in Bezug auf das Automatisierungssystem (1) und/oder das Antriebssystem (5) ermittelt wird, und wobei die Position des Läufers (50) zumindest doppelt so häufig ermittelt wird wie die anzuzeigende Projektion gerendert wird.

3. Verfahren nach Anspruch 1 oder 2, wobei die anzuzeigende Projektion zunächst in einem virtuellen Figurenraum (200) anhand wenigstens eines virtuellen Objekts (201) berechnet und anschließend für einen Realraum anhand eines Sichtfensters (202) des Figurenraums (200) gerendert wird, wobei durch die ausgegebene gerenderte Projektion (110, 111) des Sichtfensters (202) die Erfassung und/oder Wahrnehmung des Läufers (50) oder dessen Aufbauten und/oder Transportgüter und/oder die Oberfläche (7) mit Informationen aus dem Figurenraum (200) angereichert werden, wobei die Positionsinformation anhand einer Position des Läufers (50) in Bezug auf den Figurenraum (200) bestimmt wird.

4. Verfahren nach Anspruch 3, wobei der Figurenraum (200) verschiedene Elemente beinhaltet, wobei eines der Elemente mittels einer Information aus der Steuereinheit (30) und/oder aus dem Automationssystem (1) als anzuzeigendes Objekt ausgewählt wird und beim Rendern der anzuzeigenden Projektion das ausgewählte Element berücksichtigt wird.

5. Verfahren nach Anspruch 4, wobei dem anzuzeigenden Objekt im Figurenraum (200) eine Eigenschaft zugeordnet ist und das Element anhand der Eigenschaft ausgewählt wird.

6. Verfahren nach einem der Ansprüche 3 bis 5, wobei das virtuelle Objekt (201) im Figurenraum (200) anhand der Positionsinformation des Läufers (50) bewegt wird.

7. Verfahren nach einem der Ansprüche 1 bis 6, wobei die anzuzeigende Projektion derart gerendert wird, dass sich das anzuzeigende Objekt mit dem Läufer (50) mitbewegt und eine Relativposition zwischen dem Läufer (50) und dem anzuzeigenden Objekt fixiert ist.

8. Verfahren nach Anspruch 6 oder 7, wobei das Ermitteln der Positionsinformation, das Rendern der anzuzeigenden Projektion sowie das Ausgeben der gerenderten Projektion zumindest nach jeder Ortsveränderung des Läufers (50) erneut durchgeführt wird.

9. Verfahren nach einem der Ansprüche 1 bis 8, wobei das anzuzeigende Objekt mit einer realen Messgröße des Antriebssystems (5) verknüpft ist.

10. Verfahren nach einem der Ansprüche 1 bis 9, wobei die Anzeigeinformation über eine Schnittstelle (36) eingelesen wird und das anzuzeigende Objekt anhand der Anzeigeinformation eingestellt wird.

11. Verfahren nach einem der Ansprüche 1 bis 10, wobei das Automatisierungssystem (1) eine weitere optische Projektionseinheit (101) umfasst, wobei vor dem Rendern der anzuzeigenden Projektion anhand der Positionsinformation festgestellt wird, ob die gerenderte Projektion von der optischen Projektionseinheit (100) und/oder von der weiteren optischen Projektionseinheit (101) projiziert werden soll und beim Rendern der anzuzeigenden Projektion diese Information berücksichtigt wird.

12. Verfahren nach Anspruch 11, wobei in einem Übergangsbereich die gerenderte Projektion sowohl von der optischen Projektionseinheit (100) als auch von der weiteren optischen Projektionseinheit (101) projiziert wird.

13. Automatisierungssystem (1) mit einem Antriebssystem (5) und einer optischen Projektionseinheit (100), wobei das Antriebssystem (5) ein Planarantriebssystem ist, das einen planaren Stator und einen in mindestens zwei Richtungen bewegbaren Läufer (50) umfasst, wobei der Läufer (50) mittels eines Antriebs (6) des Stators antreibbar ist, wobei das Automatisierungssystem (1) ferner ein Steuerungssystem (30) umfasst, das eingerichtet, die Schritte des Verfahrens nach einem der Ansprüche 1 bis 12 auszuführen.

14. Automatisierungssystem (1) nach Anspruch 13, wobei der Stator des Planarantriebssystems (10) zumindest eine Statoreinheit (13) mit jeweils einer Mehrzahl von Spulengruppen (14) zum Erzeugen eines Statormagnetfelds, eine Statorfläche (15) oberhalb der Statoreinheit (13) sowie den Läufer (50) umfasst, wobei die Fläche (7) der Statorfläche (15) entspricht, wobei der Läufer (50) eine Mehrzahl von Magneteinheiten (51) zum Erzeugen eines Läufermagnetfelds aufweist, wobei die Spulengruppen (14) und die Magneteinheiten (51) den Antrieb (6) bilden, wobei der Läufer (50) oberhalb der Statorfläche (15) mittels einer Wechselwirkung des Statormagnetfelds mit dem Läufermagnetfeld parallel zur Statorfläche (15) bewegbar ist.

## Claims

1. A method for operating an automation system (1), wherein the automation system (1) comprises a drive system (5) comprising a rotor (50) and an optical projection unit (100), wherein a control system (30) of the automation system (1) carries out the following steps:
- determining a position information of the rotor (50);
- linking the rotor (50) to an object to be displayed, said object comprising a display information;
- rendering a projection to be displayed by the optical projection unit (100) based on the position information of the rotor (50) and the object to be displayed, wherein the projection to be displayed generates an image;
- outputting the rendered projection (110, 111) to the optical projection unit (100), so that the optical projection unit (100) outputs the rendered projection (110, 111) on a surface (7) and/or on the rotor (50) or its superstructures and/or transport goods of the drive system (5),
**characterized in that**
the drive system (5) is a planar drive system comprising a planar stator and a rotor (50) movable in at least two directions, wherein the rotor (50) may be driven with the aid of a drive (6) of the stator, wherein the position information comprises a distance of a rotor surface (52) to a surface (7) and wherein the distance is taken into account during rendering of the projection to be displayed.

2. The method according to claim 1, wherein the position information is determined on the basis of a position of the rotor (50) in relation to the automation system (1) and/or to the drive system (5), and wherein the position of the rotor (50) is determined at least twice as often as the projection to be displayed is rendered.

3. The method according to claim 1 or 2, wherein the projection to be displayed is first calculated in a virtual figure space (200) using at least one virtual object (201) and then rendered for a real space using a viewing window (202) of the figure space (200), wherein the detection and/or perception of the rotor (50) or its superstructures and/or transported goods and/or the surface (7) are enriched with information from the figure space (200) by the output rendered projection (110, 111) of the viewing window (202), wherein the position information is determined on the basis of a position of the rotor (50) with respect to the figure space (200).

4. The method according to claim 3, wherein the figure space (200) contains various elements, wherein one of the elements is selected as the object to be displayed with the aid of information from the controller (30) and/or from the automation system (1) and the selected element is taken into account when rendering the projection to be displayed.

5. The method according to claim 4, wherein a property is assigned to the object to be displayed in the figure space (200) and the element is selected on the basis of the property.

6. The method according to any one of claims 3 to 5, wherein the virtual object (201) is moved in the figure space (200) based on the position information of the rotor (50).

7. The method according to any one of claims 1 to 6, wherein the projection to be displayed is rendered in such a way that the object to be displayed moves along with the rotor (50) and a relative position between the rotor (50) and the object to be displayed is fixed.

8. The method according to claim 6 or 7, wherein determining the position information, rendering the projection to be displayed and outputting the rendered projection are carried out again at least after each change in position of the rotor (50).

9. The method according to any one of claims 1 to 8, wherein the object to be displayed is linked to a real measured variable of the drive system (5).

10. The method according to any one of claims 1 to 9, wherein the display information is read in via an interface (36) and the object to be displayed is set on the basis of the display information.

11. The method according to any one of claims 1 to 10, wherein the automation system (1) comprises a further optical projection unit (101), wherein before rendering the projection to be displayed, it is determined on the basis of the position information whether the rendered projection is to be projected by the optical projection unit (100) and/or by the further optical projection unit (101) and this information is taken into account when rendering the projection to be displayed.

12. The method according to claim 11, wherein in a transition region the rendered projection is projected both by the optical projection unit (100) and by the further optical projection unit (101).

13. An automation system (1) comprising a drive system (5) and an optical projection unit (100), wherein the drive system (5) is a planar drive system comprising a planar stator and a rotor (50) movable in at least two directions, wherein the rotor (50) may be driven with the aid of a drive (6) of the stator, wherein the automation system (1) further comprises a control system (30) set up to carry out the method steps according to any one of claims 1 to 12.

14. The automation system (1) according to claim 13, wherein the stator of the planar drive system (10) comprises at least one stator assembly (13) each having a plurality of coil groups (14) for generating a stator magnetic field, a stator surface (15) above the stator assembly (13) and the rotor (50), wherein the surface (7) corresponds to the stator surface (15), wherein the rotor (50) comprises a plurality of magnet units (51) for generating a rotor magnetic field, wherein the coil groups (14) and the magnet units (51) form the drive (6), wherein the rotor (50) above the stator surface (15) may be moved in parallel to the stator surface (15) with the aid of an interaction of the stator magnetic field with the rotor magnetic field.

## Revendications

1. Procédé pour faire fonctionner un système d'automatisation (1), le système d'automatisation (1) comprenant un système d'entraînement (5) doté d'un coulisseau (50), et une unité de projection optique (100), un système de commande (30) du système d'automatisation (1) mettant en œuvre les étapes suivantes :
- déterminer des informations de position du coulisseau (50) ;
- associer le coulisseau (50) à un objet à afficher qui comprend des informations d'affichage ;
- rendre une projection à afficher par l'unité de projection optique (100) sur la base des informations de position du coulisseau (50) et de l'objet à afficher, la projection à afficher générant une image ;
- délivrer la projection rendue (110, 111) à l'unité de projection optique (100) de telle sorte que l'unité de projection optique (100) fournit en sortie la projection rendue (110, 111) sur une surface (7) et/ou sur le coulisseau (50) ou sur ses superstructures et/ou sur les biens de transport du système d'entraînement (5)
**caractérisé en ce que**
le système d'entraînement (5) est un système d'entraînement planaire qui comprend un stator planaire et un coulisseau (50) mobile dans au moins deux directions, le coulisseau (50) pouvant être entraîné au moyen d'un entraînement (6) du stator, les informations de position comprenant une distance entre une surface de coulisseau (52) et la surface (7), et la distance étant prise en compte lors du rendu de la projection à afficher.

2. Procédé selon la revendication 1, dans lequel les informations de position sont déterminées sur la base d'une position du coulisseau (50) par rapport au système d'automatisation (1) et/ou au système d'entraînement (5), et dans lequel la position du coulisseau (50) est déterminée au moins deux fois plus souvent que n'est rendue la projection à afficher.

3. Procédé selon la revendication 1 ou 2, dans lequel la projection à afficher est d'abord calculée dans un espace de figure virtuel (200) sur la base d'au moins un objet virtuel (201) et est ensuite rendue pour un espace réel sur la base d'une fenêtre de visualisation (202) de l'espace de figure (200), la détection et/ou la perception du coulisseau (50) ou de ses superstructures et/ou des biens de transport et/ou de la surface (7) étant enrichies d'informations provenant de l'espace de figure (200) grâce à la projection rendue (110, 111) fournie en sortie de la fenêtre de visualisation (202), les informations de position étant déterminées sur la base d'une position du coulisseau (50) par rapport à l'espace de figure (200).

4. Procédé selon la revendication 3, dans lequel l'espace de figure (200) comprend différents éléments, l'un des éléments étant sélectionné en tant qu'objet à afficher au moyen d'informations provenant de l'unité de commande (30) et/ou du système d'automatisation (1), et l'élément sélectionné étant pris en compte lors du rendu de la projection à afficher.

5. Procédé selon la revendication 4, dans lequel une propriété est associée à l'objet à afficher dans l'espace de figure (200) et l'élément est sélectionné sur la base de la propriété.

6. Procédé selon l'une quelconque des revendications 3 à 5, dans lequel l'objet virtuel (201) est déplacé dans l'espace de figure (200) sur la base des informations de position du coulisseau (50).

7. Procédé selon l'une quelconque des revendications 1 à 6, dans lequel la projection à afficher est rendue de manière à ce que l'objet à afficher se déplace conjointement avec le coulisseau (50) et qu'une position relative entre le coulisseau (50) et l'objet à afficher soit fixée.

8. Procédé selon la revendication 6 ou 7, dans lequel la détermination des informations de position, le rendu de la projection à afficher ainsi que la fourniture en sortie de la projection rendue sont à nouveau effectués au moins après chaque changement de position du coulisseau (50).

9. Procédé selon l'une quelconque des revendications 1 à 8, dans lequel l'objet à afficher est associé à une grandeur de mesure réelle du système d'entraînement (5).

10. Procédé selon l'une quelconque des revendications 1 à 9, dans lequel les informations d'affichage sont lues par l'intermédiaire d'une interface (36) et l'objet à afficher est réglé sur la base des informations d'affichage.

11. Procédé selon l'une quelconque des revendications 1 à 10, dans lequel le système d'automatisation (1) comprend une autre unité de projection optique (101), dans lequel, avant le rendu de la projection à afficher, il est établi sur la base des informations de position si la projection rendue doit être projetée par l'unité de projection optique (100) et/ou par l'autre unité de projection optique (101), et ces informations sont prises en compte lors du rendu de la projection à afficher.

12. Procédé selon la revendication 11, dans lequel la projection rendue est projetée dans une zone de transition tant par l'unité optique de projection (100) que par l'autre unité optique de projection (101).

13. Système d'automatisation (1) comprenant un système d'entraînement (5) et une unité de projection optique (100), dans lequel le système d'entraînement (5) est un système d'entraînement planaire qui comprend un stator planaire et un coulisseau (50) mobile dans au moins deux directions, le coulisseau (50) pouvant être entraîné au moyen d'un entraînement (6) du stator, le système d'automatisation (1) comprenant en outre un système de commande (30) conçu pour mettre en œuvre les étapes du procédé selon l'une quelconque des revendications 1 à 12.

14. Système d'automatisation (1) selon la revendication 13, dans lequel le stator du système d'entraînement planaire (10) comprend au moins une unité statorique (13) dotée respectivement d'une pluralité de groupes de bobines (14) pour générer un champ magnétique statorique, une surface statorique (15) au-dessus de l'unité statorique (13), ainsi que le coulisseau (50), la surface (7) correspondant à la surface statorique (15), le coulisseau (50) comportant une pluralité d'unités magnétiques (51) pour générer un champ magnétique de coulisseau, les groupes de bobines (14) et les unités magnétiques (51) formant l'entraînement (6), le coulisseau (50) étant mobile au-dessus de la surface statorique (15) parallèlement à la surface statorique (15) au moyen d'une interaction du champ magnétique statorique avec le champ magnétique de coulisseau.
